# FASCICULE DE BREVET EUROPEEN

(11) **EP 1 338 193 B1**
(45) Date de publication et mention de la délivrance du brevet: **17.01.2007**
(21) Numéro de dépôt: 03290329.6
(22) Date de dépôt: 11.02.2003
(51) Int. Cl.: A01G 17/06

(54) **Dispositif de fixation de fil, notamment pour un piquet de vigne**
Drahtbefestigungseinrichtung, insbesondere für ein Rebepfahl
Wire fastening device, especially for a vine post

(30) Priorité: 21.02.2002 FR 0202191
(43) Date de publication de la demande: 27.08.2003
(73) Titulaire: Gissinger, Jean-Edouard, 08800 Thilay (FR); Thevenin, Patrick, 08150 Bolmont (FR); Thevenin, Stéphane, 51420 Witry Les Reims (FR)
(72) Inventeur: Gissinger, Jean-Edouard, 08800 Thilay (FR); Thevenin, Patrick, 08150 Bolmont (FR); Thevenin, Stéphane, 51420 Witry Les Reims (FR)
(74) Mandataire: Laget, Jean-Loup

(56) Documents cités:
- EP-B- 0 072 420
- FR-A- 2 566 064
- FR-A- 2 686 640
- US-A- 1 454 254
- US-A- 4 346 871
- US-A- 4 982 932
- US-A- 6 050 549

## Description

L'invention est relative à un dispositif de fixation de fil, notamment de fixation de fil sur un piquet de vigne.

L'invention est particulièrement utile dans son application à la fixation de fil de palissade de vignoble.

Les vignes sont habituellement plantées en lignes parallèles, de manière à aligner les sarments de vigne en les palissant sur un palissage comprenant des piquets régulièrement espacés supportant des fils fixes et des fils releveurs.

On peut réaliser ces palissages à l'aide de piquets en bois généralement ronds, ou à l'aide de piquets profilés généralement à section constante.

Les piquets profilés comprennent des piquets métalliques laminés à chaud ou profilés à froid et présentant une section constante en L, en T en C ou en Ω ou en une autre forme présentant un bord d'épaisseur sensiblement constante ; et comprennent des piquets réalisés en matière plastique présentant une section en L, en C, en Ω ou en une autre forme présentant un bord d'épaisseur sensiblement constante.

Généralement, il est nécessaire de prévoir des orifices dans les piquets profilés pour utiliser ces orifices comme moyens de fixation ou moyens de blocage de systèmes à boucles ou à barrettes. Le positionnement et le maintien des fils releveurs peut alors être effectué à l'aide de moyens connus, lesdits moyens comportant généralement des crochets ou des encoches permettant l'engagement et le dégagement d'un fil releveur.

Un but de l'invention est de fournir un nouveau moyen de fixation de fil sur des piquets profilés réalisés en métal ou en matière plastique.

Le document US 4 982 932 décrit un assemblage de pince formant clip.

Un autre but de l'invention est de simplifier la fixation de fil tout en gardant les avantages de la technique connue et en procurant un nouveau moyen de fixation simple et économique de fil releveur.

Le document FR 2 566 064 décrit un cavalier pour porter et guider ou fixer un fil sur un bord de paroi et correspondant au préambule de la revendication 1.

L'invention a pour objet un dispositif de fixation de fil, notamment de fil sur piquet profilé de vigne comportant un bord libre, ledit dispositif présentant une extrémité de support de fil releveur ou de maintien de fil fixe, ledit dispositif présentant une extrémité de support de fil releveur ou de maintien de fil fixe, le dispositif comportant des moyens de pincement dudit bord libre de piquet profilé de vigne, caractérisé par le fait que lesdits moyens de pincement comporte au moins une mâchoire destinée à enserrer le bord du profilé ou piquet et disposée à l'opposé de l'extrémité de support de fil releveur ou de maintien de fil fixe.

Selon d'autres caractéristiques alternatives de l'invention :
- lesdits moyens de pincement sont disposés à l'opposé de l'extrémité de support de fil releveur ou de maintien de fil fixe,
- des moyens de pincement peuvent comporter des harpons anti-retour,
- lesdits moyens de pincement comportent deux mâchoires aptes à enserrer le bord de piquet profilé de vigne,
- le dispositif comporte une ligne d'affaiblissement pour faciliter le pliage de l'extrémité de support ou de maintien,
- le dispositif comporte une surface de frappe permettant son enfoncement au marteau,
- le dispositif vient de matière d'un seul tenant et est fabriqué en un matériau métallique présentant de bonnes propriétés élastiques,
- le dispositif est réalisé par découpe, pliage ou mise en forme de feuillard métallique.

L'invention sera mieux comprise grâce à la description qui va suivre donnée à titre d'exemple non limitatif en référence aux dessins annexés dans lesquels :
- La figure 1 représente schématiquement une vue en perspective d'un dispositif selon l'invention.
- La figure 2 représente schématiquement, une vue en perspective d'un dispositif selon l'invention assemblé à un piquet en forme de cornière.
- La figure 3 représente schématiquement, un autre mode de réalisation de dispositif selon l'invention.
- Les figures 4 à 6 représentent schématiquement, des vues en perspective de dispositif selon l'invention assemblé à des piquets profilés de différentes sections.
- la figure 7 représente schématiquement, un mode de réalisation préféré de l'invention.
- la figure 8 représente schématiquement une vue en perspective d'un autre mode de réalisation de dispositif selon l'invention.

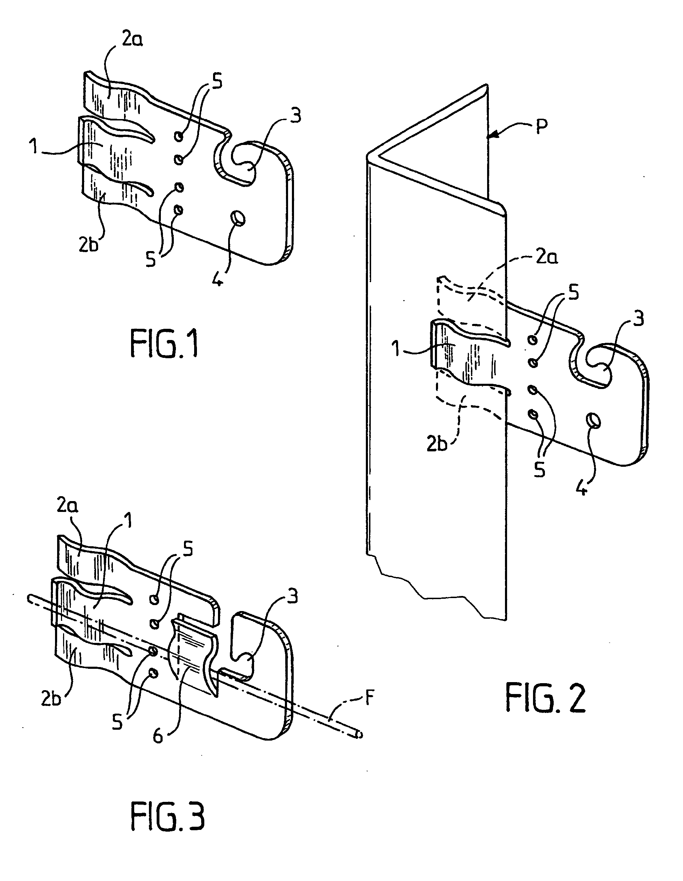

En référence aux figures 1 et 2, un dispositif selon l'invention comporte une extrémité destinée à être fixée sur le profilé P ou piquet de vigne et une autre extrémité destinée à supporter un fil fixe ou un fil releveur.

L'extrémité destinée à être fixée au piquet P présente sensiblement une forme de pince avec une mâchoire centrale 1 et deux mâchoires latérales 2a, 2b, destinées à enserrer le bord du profilé ou piquet P de vigne en exerçant de préférence un appui élastique sur celui-ci.

L'autre extrémité du dispositif présente une conformation 3 de réception de fil releveur, par exemple en forme de crochet et un orifice 4 de passage de fil fixe. Une ligne d'affaiblissement 5 permettant un pliage d'une extrémité du dispositif par rapport à l'autre peut avantageusement être prévue pour orienter l'extrémité de réception de fil par rapport au piquet P. Cette ligne d'affaiblissement 5 peut être constituée par des trous alignés facilitant un pliage manuel du dispositif.

Ainsi, même dans le cas de piquets P successifs dont les bords ne sont pas parallèles, on peut orienter les extrémités de réception de fil pour faire passer les fils dans les ouvertures, encoches ou labyrinthes correspondants.

En référence à la figure 3, un autre mode de réalisation de dispositif selon l'invention comporte des éléments identiques ou fonctionnellement équivalents aux éléments du dispositif des figures 1 et 2, repérés par des chiffres de référence identiques.

Le dispositif de la figure 3 diffère du dispositif de la figure 1 par la présence d'une languette 6 de maintien pour le passage d'un fil releveur F.

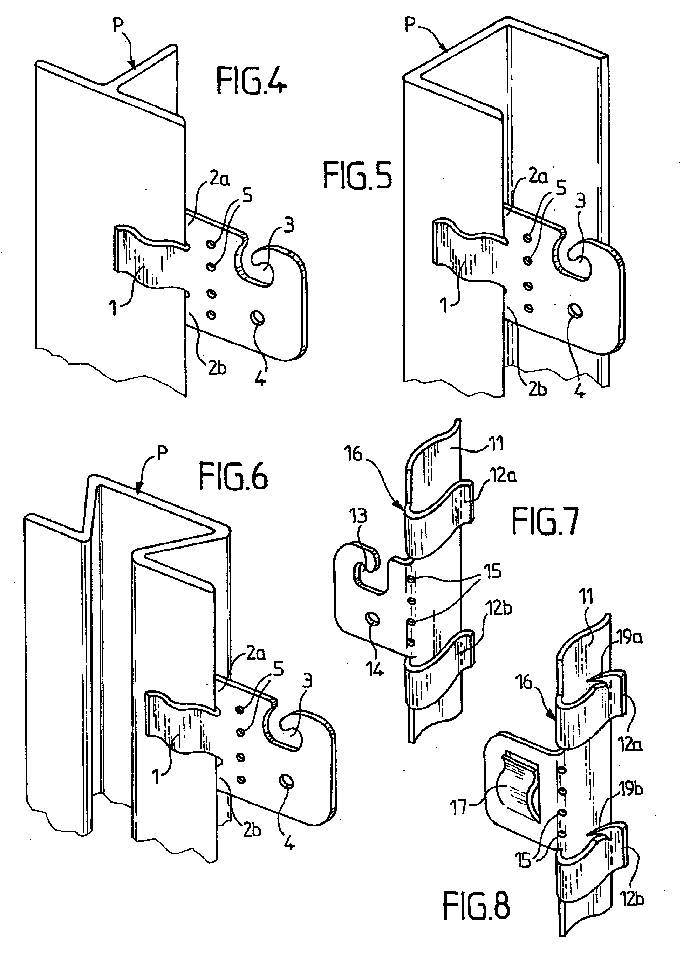

En référence aux figures 4 à 6, un dispositif selon l'invention est représenté monté sur des profilés de sections différentes: la figure 4 représente un dispositif selon l'invention monté sur un profilé présentant une section en T, la figure 5 représente un dispositif selon l'invention monté sur un profilé en forme de C, et la figure 6 représente un dispositif selon l'invention monté sur un dispositif présentant une section en Ω.

En référence à la figure 7, un autre dispositif selon l'invention présente une extrémité en forme de pince avec une mâchoire 11 de plus grande largeur et deux languettes 12a, 12b de largeur plus faible, ainsi qu'une encoche 13 de réception de fil releveur, un orifice 14 de passage de fil fixe, et une ligne d'affaiblissement 15 permettant le pliage de l'extrémité de support de fil par rapport à l'extrémité de fixation sur le piquet.

Le dispositif comporte en outre une surface de frappe 16 permettant l'emploi d'un marteau pour l'arrimage de la pince comprenant les éléments 11, 12a, 12b sur un piquet de vigne non représenté.

Ce dispositif à surface de frappe 16 permet une fixation rapide sur toute dimension de piquet.

En référence à la figure 8, un autre dispositif selon l'invention comporte des éléments identiques ou similaires aux éléments de la figure 7 et repérés par des chiffres de référence identique.

Le dispositif de la figure 8 comporte un harpon anti-retour 19a ou 19b réalisé par découpe sur chaque languette 12a ou 12b, de manière à obtenir un accrochage plus efficace sur un bord de piquet.

Le dispositif de la figure 8 présente également une partie de réception de fil orientable par rapport à la partie de fixation sur le piquet, de manière à saisir le dispositif par cette partie de réception de fil pour frapper la surface de frappe 16 lors de l'insertion sur un bord de piquet non représenté.

La partie de réception de fil peut comporter une languette 17 de maintien de fil releveur analogue à la languette 6 du dispositif de la figure 3.

L'invention décrite en référence à plusieurs modes de réalisation n'y est nullement limitée, mais couvre au contraire toute modification de forme et toute variante de réalisation dans le cadre et l'esprit de l'invention.

Ainsi, chaque mode de réalisation décrit peut comporter un ou plusieurs harpons anti-retour tels que les harpons anti-retour 19a ou 19b de la figure 8.

## Revendications

1. Dispositif de fixation de fil, notamment de fil sur piquet profilé (P) de vigne comportant un bord libre, ledit dispositif présentant une extrémité de support (3) de fil releveur ou de maintien (4) de fil fixe, le dispositif comportant des moyens de pincement dudit bord libre de piquet profilé de vigne, **caractérisé par le fait que** lesdits moyens de pincement (1, 2b ; 11, 12a,12b) comporte au moins une mâchoire destinée à enserrer le bord du profilé ou piquet (P) et disposée à l'opposé de l'extrémité de support (3) de fil releveur ou de maintien de fil fixe.

2. Dispositif selon la revendication 1, **caractérisé par le fait que** les moyens de pincement (12a, 12b) comportent un ou plusieurs harpon(s) anti-retour (19a, 19b).

3. Dispositif selon la revendication 1 ou la revendication 2, **caractérisé par le fait que** lesdits moyens de pincement (1, 2a, 2b ; 11, 12a, 12b) comportent deux mâchoires (1, 2a, 2b ; 11, 12a, 12b) aptes à enserrer le bord de piquet profilé (P) de vigne.

4. Dispositif selon l'une quelconque des revendications 1 à 3, **caractérisé par le fait que** le dispositif comporte une ligne (5) d'affaiblissement pour faciliter le pliage de l'extrémité de support ou de maintien.

5. Dispositif selon l'une quelconque des revendications précédentes, **caractérisé par le fait que** le dispositif comporte une surface de frappe (16) permettant son enfoncement au marteau.

6. Dispositif selon l'une quelconque des revendications précédentes, **caractérisé par le fait que** le dispositif vient de matière d'un seul tenant et est fabriqué en un matériau métallique présentant de bonnes propriétés élastiques.

7. Dispositif selon la revendication 6, **caractérisé par le fait que** le dispositif est réalisé par découpe, pliage ou mise en forme de feuillard métallique.

## Claims

1. Wire fixing device, notably for wires on a viticulture section rod (P) with a free edge, the said device having an end to support (3) a lifting wire or to hold (4) a fixed wire, the device comprising clamping means for the said free edge of the viticulture section rod, **characterised by** the fact that the said clamping means (1, 2b; 11, 12a, 12b) comprises at least one jaw designed to grip the edge of the section or rod (P) and placed opposite the end to support (3) the lifting wire or to hold the fixed wire.

2. Device according to claim 1, **characterised by** the fact that the clamping means (12a, 12b) comprises one or several anti-return harpoon(s) (19a, 19b).

3. Device according to claim 1 or claim 2 **characterised by** the fact that the said clamping means (1, 2a, 2b; 11, 12a, 12b) comprises two jaws (1, 2a, 2b; 11, 12a, 12b) capable of gripping the edge of the viticulture section rod (P).

4. Device according to any of claims 1 to 3, **characterised by** the fact that the device comprises an attenuation line (5) to facilitate the bending of the supporting or holding end.

5. Device according to any of the preceding claims, **characterised by** the fact that the device comprises an impact surface (16) allowing it to be struck by a hammer.

6. Device according to any of the preceding claims, **characterised by** the fact that the device is made from one piece of material and is in a metallic material with good elastic properties.

7. Device according to claim 6, **characterised by** the fact that the device is made by cutting, bending or shaping a metallic sheet.

## Patentansprüche

1. Vorrichtung zur Befestigung von Draht, insbesondere von Draht an einem Reben-Profilpfahl (P) mit einem freien Rand, wobei die Vorrichtung ein Ende zum Abstützen (3) von Spalierdraht oder zum Haltern (4) von festem Draht und Mittel zum Einklemmen des freien Randes des Reben-Profilpfahls aufweist, **dadurch gekennzeichnet, daß** die Mittel zum Einklemmen (1, 2b; 11, 12a, 12b) mindestens eine Klemmbacke umfassen, die zum Einklemmen des Randes des Profils oder Pfahls (P) bestimmt und dem Ende zum Abstützen (3) von Spalierdraht oder zum Haltern von festem Draht gegenüberliegend angeordnet ist.

2. Vorrichtung nach Anspruch 1, **dadurch gekennzeichnet, daß** die Mittel zum Einklemmen (12a, 12b) einen oder mehrere rücklaufsichernde Gabelhaken (19a, 19b) umfassen.

3. Vorrichtung nach Anspruch 1 oder Anspruch 2, **dadurch gekennzeichnet, daß** die Mittel zum Einklemmen (1, 2a, 2b; 11, 12a, 12b) zwei Klemmbacken (1, 2a, 2b; 11, 12a, 12b) aufweisen, die zum Einklemmen des Randes des Reben-Profilpfahls (P) geeignet sind.

4. Vorrichtung nach einem der Ansprüche 1 bis 3, **dadurch gekennzeichnet, daß** die Vorrichtung eine Schwächungslinie (5) zum leichteren Biegen des Endes zum Abstützen oder zum Haltern umfaßt.

5. Vorrichtung nach einem der vorhergehenden Ansprüche, **dadurch gekennzeichnet, daß** sie eine Schlagfläche (16) aufweist, die ihr Einschlagen mit einem Hammer gestattet.

6. Vorrichtung nach einem der vorhergehenden Ansprüche, **dadurch gekennzeichnet, daß** die Vorrichtung einstückig ausgebildet und aus einem metallischen Material mit guten elastischen Eigenschaften gefertigt ist.

7. Vorrichtung nach Anspruch 6, **dadurch gekennzeichnet, daß** die Vorrichtung mittels Schneiden, Biegen oder Formgebung eines Metallbandes verwirklicht wird.
